# FASCICULE DE BREVET EUROPEEN

(11) **EP 2 491 735 B1**
(45) Date de publication et mention de la délivrance du brevet: **04.09.2019**
(21) Numéro de dépôt: 10766295.9
(22) Date de dépôt: 20.10.2010
(51) Int. Cl.: H04W 12/08, H04L 29/06

(54) **DISPOSITIF ET PROCÉDÉ DE GESTION DES DROITS D'ACCÈS À UN RÉSEAU SANS FIL**
VORRICHTUNG UND VERFAHREN ZUR VERWALTUNG VON ZUGANGSRECHTEN FÜR EIN DRAHTLOSES NETZWERK
DEVICE AND METHOD FOR MANAGING ACCESS RIGHTS TO A WIRELESS NETWORK

(30) Priorité: 23.10.2009 FR 0957463
(43) Date de publication de la demande: 29.08.2012
(73) Titulaire: Idemia Identity & Security France, 92400 Courbevoie (FR)
(72) Inventeur: PEPIN, Cyrille, F-75015 Paris (FR); LECOCQ, François, F-75015 Paris (FR)
(74) Mandataire: Cabinet Le Guen Maillet
(86) Numéro de dépôt international: PCT/EP2010/065828
(87) Numéro de publication internationale: WO 2011/048161

(56) Documents cités:
- EP-A1- 1 701 478
- WO-A1-2007/056383
- WO-A2-02/100062
- WO-A2-2004/034205
- US-A1- 2006 090 023
- US-A1- 2007 025 334

## Description

La présente invention concerne un dispositif et un procédé de gestion des droits d'accès à un réseau sans fil.

Aujourd'hui, les réseaux de communication et plus particulièrement le réseau Internet prennent une place de plus en plus grande dans la communication que ce soit sur le plan personnel ou sur le plan professionnel. Les utilisateurs éprouvent le désir de pouvoir se connecter à ce réseau d'une manière si possible permanente ou tendant à devenir permanente. Dans ce contexte, un des moyens d'accès privilégiés est l'accès sans fil pouvant se faire depuis un terminal mobile de communication. En particulier, l'accès selon la norme *Wi-Fi* normalisée par IEEE (*Institute of Electrical and Electronics Engineers* en anglais) dans la famille de norme 802.11, tend à se généraliser. Cet accès se fait par le déploiement de points d'accès *Wi-Fi* connectés au réseau d'information et permettant à des terminaux, typiquement un ordinateur portable, d'établir une connexion avec ce point d'accès. Une fois cette connexion établie, le trafic de données est relayé par le point d'accès entre le terminal et le réseau de communication.

De tels points d'accès sont déployés par de multiples acteurs économiques. On peut citer des accès publics gérés par des collectivités dans des établissements publics comme des bibliothèques. On peut citer aussi des accès mis à la disposition des voyageurs dans les aéroports, les gares ou les hôtels. Les entreprises tendent également à déployer des points d'accès à leur réseau informatique et à Internet, d'une part pour leurs salariés, d'autre part pour des visiteurs.

Certains de ces accès ont vocation à être ouverts de manière non limitée ou non contrôlée, typiquement un accès public ou dans certains cas un accès aux salariés dans l'entreprise. Au contraire, d'autres accès ont vocation à être limités et contrôlés, que ce soit pour des raisons de sécurité pour des visiteurs dans une entreprise ou parce que l'on souhaite monnayer l'accès, typiquement dans un hôtel. Ces limites peuvent être géographiques, l'accès visiteur est par exemple limité à une salle de réunion dans une entreprise. Ces limites peuvent être temporelles, on peut utiliser un système de crédits de connexion vendus dans un hôtel ou une gare par exemple.

Aujourd'hui, ces contraintes sont généralement gérées par un système *AAA* (*Authentication, Authorization and Accounting* en anglais) d'authentification, d'autorisation et de comptabilité central sous la forme de comptes utilisateurs auxquels sont associées les contraintes. Ce système est lourd à gérer, toute vente d'un service nécessitant une mise à jour sur le système central et la distribution d'identifiants de connexion associés à l'utilisateur.

Le document WO2004/034205 A2 décrit un système de contrôle et de gestion des accès réseaux, et plus particulièrement WiFi, basé sur l'utilisation d'un token USB qui contient avantageusement une carte à puce. Le document WO2007/056383 A1 décrit une gestion de droit d'accès centralisée qui génère des règles pour un ensemble de points d'accès. Le document US2007/025334 A1 décrit un système dans lequel un terminal mobile se voit adjoindre un composant de sécurité pour gérer des listes d'autorisations (ACL) pour des points d'accès. Le document EP 1 701 478 A1 décrit un système et un procédé pour configurer des interfaces sans fil, basé sur l'utilisation d'un stick USB-WLAN.

L'invention vise à résoudre les problèmes précédents par l'utilisation de dispositifs de connexion sans fil, avantageusement basés sur une carte à puce, qui permettent la connexion sans fil au réseau une fois connectés à un terminal. Ces dispositifs intègrent des moyens de gestion temporelle et/ou géographique de l'accès au réseau et des moyens d'authentification. Ces dispositifs peuvent être facilement préprogrammés par l'entité gérant le service et ensuite distribués aux utilisateurs. L'invention est définie dans les revendications 1 et 8.

L'invention concerne un dispositif d'accès à un réseau sans fil comprenant des moyens de connexion à un dispositif hôte ; des moyens de connexion à un point d'accès d'un réseau sans fil ; des moyens d'ouvrir une connexion avec le point d'accès du réseau sans fil à la réception d'une demande d'activation de connexion de façon à permettre l'accès au réseau sans fil à la machine hôte à laquelle il est connecté et des moyens de gestion de droits d'accès au réseau sans fil.

Selon un mode particulier de réalisation de l'invention, au moins les moyens de gestion de droits d'accès au réseau sans fil sont intégrés à une carte à puce.

Selon un mode particulier de réalisation de l'invention, les moyens de gestion de droits d'accès au réseau sans fil comprennent des moyens de limiter temporellement cet accès.

Selon un mode particulier de réalisation de l'invention, les moyens de gestion de droits d'accès au réseau sans fil comprennent un certificat ayant une durée de validité restreinte.

Selon un mode particulier de réalisation de l'invention, les moyens de gestion de droits d'accès au réseau sans fil comprennent des moyens de décompter le temps de connexion d'un crédit préprogrammé.

Selon un mode particulier de réalisation de l'invention, les moyens de gestion de droits d'accès au réseau sans fil comprennent des moyens de limiter géographiquement cet accès.

Selon un mode particulier de réalisation de l'invention, les moyens de gestion de droits d'accès au réseau sans fil comprennent des moyens de gestion de listes de contrôle d'accès permettant de déterminer quelles connexions sont autorisées.

L'invention concerne également un procédé de gestion des droits d'accès à un réseau sans fil comprenant une étape de réception d'une demande d'activation de connexion par un dispositif d'accès réseau sans fil comprenant des moyens de connexion à un dispositif hôte, des moyens de connexion à un point d'accès d'un réseau sans fil et des moyens d'ouvrir une connexion avec le point d'accès du réseau sans fil à la réception d'une demande d'activation de connexion de façon à permettre l'accès au réseau sans fil à la machine hôte à laquelle il est connecté ; une étape de test des points d'accès disponibles ; une étape de vérification de ce qu'au moins un point d'accès disponible est autorisé ; une étape de connexion si ce test est positif ; une étape refusant la connexion si ce test est négatif.

L'invention concerne également un procédé de gestion des droits d'accès à un réseau sans fil comprenant une étape de réception d'une demande d'activation de connexion par un dispositif d'accès réseau sans fil comprenant des moyens de connexion à un dispositif hôte, des moyens de connexion à un point d'accès d'un réseau sans fil et des moyens d'ouvrir une connexion avec le point d'accès du réseau sans fil à la réception d'une demande d'activation de connexion de façon à permettre l'accès au réseau sans fil à la machine hôte à laquelle il est connecté ; une étape de test de temps disponible ; une étape de test de la disponibilité du réseau ; une étape de connexion si ces deux tests sont positifs ; une étape refusant la connexion si l'un de ces tests est négatif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 décrit l'architecture générale d'un exemple de système utilisant l'invention,
La Fig. 2 décrit l'architecture matérielle d'un exemple de réalisation de l'invention,
La Fig. 3 décrit un premier exemple de procédé de connexion selon l'invention,
La Fig. 4 décrit un second exemple de procédé de connexion selon l'invention.

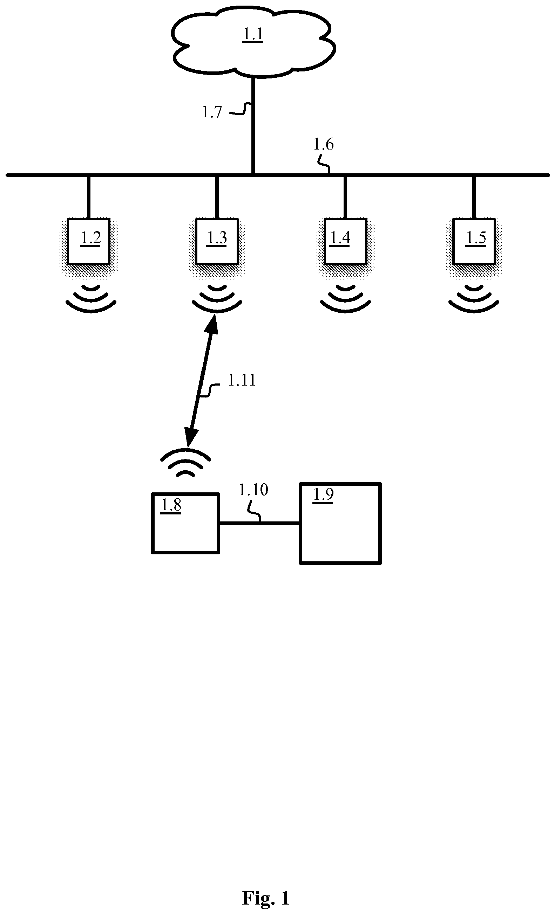

L'architecture générale d'utilisation de l'invention est illustrée Fig. 1. Sur cette figure, on voit un terminal personnel 1.9, par exemple un ordinateur personnel, un ordinateur portable, un assistant personnel ou autre. L'utilisateur de ce terminal 1.9 cherche à accéder à un réseau de communication 1.1, typiquement Internet. L'accès à ce réseau étant disponible dans son environnement sous la forme d'un ou plusieurs points d'accès sans fil 1.2 à 1.5, ces points d'accès sont typiquement des bornes d'accès *Wi-Fi.* Ces bornes étant généralement connectées entre elles par un réseau local 1.6, lui-même connecté au réseau de communication 1.1 par un lien 1.7. Il est courant aujourd'hui que les terminaux soient eux-mêmes dotés d'une interface réseau *Wi-Fi* leur permettant d'établir une connexion avec l'un des points d'accès pour établir la connexion au réseau de communication ou au réseau local auquel sont reliées les bornes d'accès.

L'invention se place toutefois dans le cadre où l'autorité chargée de la gestion du réseau local et des points d'accès cherche à contrôler cet accès. Les raisons de cette volonté de contrôle peuvent être diverses. Ce peut être des raisons de sécurité, on veut contrôler qui se connecte et d'où ainsi que les ressources du réseau auxquelles l'utilisateur peut avoir accès. Dans ce cas, on peut vouloir limiter l'accès à certains points d'accès particulier ou encore restreindre cet accès à des comptes dont les autorisations seront contrôlées, par exemple pour limiter l'accès à un intranet. Ce peut être aussi la volonté de monnayer le temps de connexion. Dans ce cas, c'est le temps d'accès que l'on souhaite pouvoir vérifier. Ces différents types de contrôles ne sont que des exemples, on peut en utiliser plusieurs ou en ajouter d'autres sans sortir de l'invention.

Dans ce cadre, l'invention se base sur la diffusion par l'autorité de gestion des accès de dispositifs d'accès 1.8 aux utilisateurs. Ces dispositifs sont dotés d'une part d'un moyen de connexion 1.10 au terminal hôte 1.9, typiquement selon la norme *USB* (*Universal Serial Bus* en anglais), mais d'autres types de connexions peuvent être utilisés indifféremment comme la technologie de connexion *Bluetooth, Ethernet* ou autres. Le dispositif 1.8 est également doté de moyens de connexion sans fil selon le protocole de communication utilisé par les points d'accès, typiquement *Wi-Fi.* L'invention est basée sur le fait que le dispositif comprend des moyens de gestion des droits d'accès au réseau sans fil. Le dispositif peut alors vérifier que les droits d'accès sont vérifiés avant d'ouvrir une connexion 1.11 avec le point d'accès et autoriser donc l'utilisateur à accéder au réseau de communication à l'aide de son terminal. Le dispositif est alors avantageusement vu comme une interface réseau par le terminal. Les points d'accès sont avantageusement configurés pour interdire l'accès à tout terminal hormis les dispositifs distribués. Dans certains modes de réalisation, les points d'accès peuvent donner un accès libre à une liste de terminaux connus, typiquement les ordinateurs utilisés par les collaborateurs dans une entreprise, tandis que les ordinateurs inconnus, ceux des visiteurs, ne peuvent se connecter qu'en utilisant un dispositif selon l'invention qui leur est distribué.

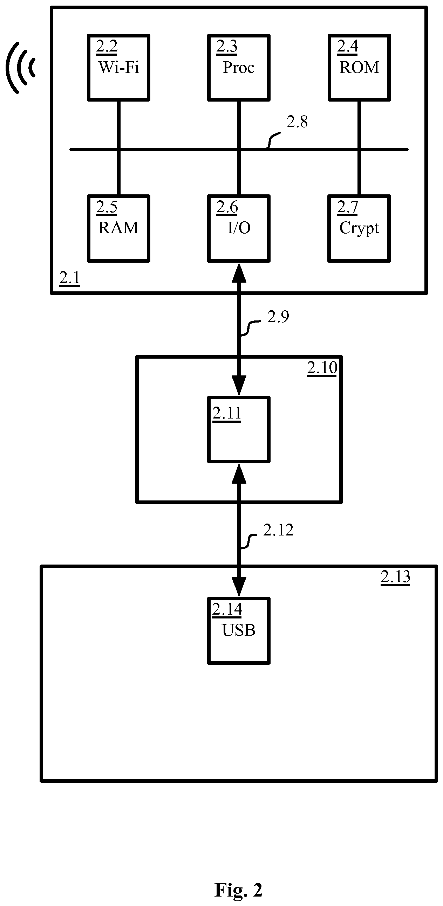

La Fig. 2 illustre l'architecture matérielle d'un exemple de réalisation du dispositif selon l'invention. Ce mode de réalisation est basé sur l'utilisation avantageuse d'une carte à puce 2.1. Cette carte à puce est connectée à un lecteur de carte à puce du type *USB* 2.10 lui-même connecté au terminal 2.13 sur un port *USB* 2.14. La carte à puce peut également être intégrée au dispositif qui se présente alors sous la forme d'une clé *USB* contenant un périphérique *Wi-Fi* et une carte à puce intégrée. Bien que pouvant être mise en oeuvre sur un périphérique *Wi-Fi* connectable par *USB,* couramment appelé « clé *USB Wi-Fi* » par simple ajout du module logiciel de gestion des droits, l'utilisation d'une carte à puce offre plusieurs avantages. Cela permet de réduire les coûts de réalisation du dispositif, la fabrication de carte à puce étant aujourd'hui une fabrication de masse. Cela permet également de profiter des moyens de sécurisation intrinsèque intégrés sur toutes les cartes à puces. La modification frauduleuse d'une telle carte est difficile. Cela permet également de disposer de périphériques disponibles pour programmer les cartes et donc pour générer facilement des dispositifs programmés avec des droits particuliers selon les utilisations. On peut également facilement réutiliser la carte par une simple reprogrammation de droits pour la redistribuer. Elle peut également être distribuée sous la forme d'un badge donnant de plus un accès au réseau.

La carte à puce 2.1 est dotée d'un module radio de connexion *Wi-Fi* 2.2. Grâce à ce module radio, la carte est à même d'établir des connexions *Wi-Fi* physiques avec un point d'accès. Alternativement, ce module radio peut être implémenté sur le lecteur de cartes et communiquer avec celle-ci. La carte à puce est contrôlée par un microcontrôleur ou processeur 2.3. Elle possède un ensemble logiciel composé d'un système d'exploitation et d'un ensemble d'applications logées en mémoire morte ou *ROM* 2.4. Ces logiciels utilisent de la mémoire vive 2.5 pour leur exécution. Il est également courant que ce genre de carte possède un coprocesseur cryptographique 2.7 leur permettant d'accélérer les opérations de chiffrement utilisées tant pour l'authentification que pour un éventuel chiffrement des données transmises. Enfin, la carte à puce possède un module de gestion des entrées/sorties 2.6 gérant les accès depuis l'extérieur et en l'occurrence avec le lecteur de carte 2.10. Tous ces modules communiquent à l'aide d'un bus 2.8.

Les échanges avec le terminal auquel est connectée cette carte à puce passent, dans l'exemple de réalisation de l'invention, par un lecteur de cartes 2.10 disposant d'une connexion *USB* 2.12 avec le terminal et gérant les entrées/sorties de la carte à puce 2.1 à l'aide du lien 2.9, l'adaptation se faisant par le module d'adaptation 2.11.

Lorsque le dispositif est connecté au terminal, il apparaît comme une interface réseau de celui-ci. Il récupère alors une adresse IP en concordance avec le réseau sur lequel il se connecte. Pour permettre la communication en *TCP*/*IP* au-dessus de la connexion *USB,* le choix s'est porté sur l'utilisation du protocole *RNDIS* (*Remote Network Driver Interface Spécification* développé par *Microsoft*). Il s'agit d'une spécification pour périphériques réseau fonctionnant sur un bus comme par exemple *USB.* Ce choix permet d'être compatible sans nécessiter de paramétrage ou d'ajouter un logiciel particulier avec une large sélection de systèmes d'exploitation du terminal de l'utilisateur tels que *Windows Vista, Apple Mac OS X* ou *Linux,* qui intègrent dans leur distribution par défaut la gestion de *RNDIS.* Sur *Windows XP,* il est simplement nécessaire d'ajouter un fichier *«.inf»* de quelques kilo-octets. Ce choix permet donc l'utilisation simple du dispositif selon l'invention avec la plupart des terminaux utilisateurs disponibles sur le marché. L'homme du métier comprend que d'autres choix peuvent être faits sur ce point, plus particulièrement si l'invention est réalisée avec une connexion autre qu'*USB* entre le dispositif et le terminal.

La partie carte à puce du dispositif n'est pas obligée d'interpréter IP pour fonctionner en limitant l'utilisation dans l'espace et dans le temps. En revanche, si les restrictions d'accès à certains sites - par exemple on ne veut pas autoriser l'accès à une adresse IP précise - ne sont pas faites par le point d'accès mais par le dispositif, la partie carte à puce peut interpréter IP et interdire toute connexion vers les adresses IP interdites. D'autres restrictions peuvent être mises en place : la carte peut interpréter d'autres protocoles et ainsi les contrôler, par exemple l'interprétation de DNS (*Domain Name Server* en anglais) permet d'interdire des noms de domaines. Les droits d'accès sont gérés par la partie carte à puce. L'utilisateur qui utilise le dispositif n'a aucun contrôle sur les droits d'accès alloués et ne peut pas les modifier.

Un module de gestion des droits d'accès au réseau sans fil est implémenté sur la carte. Ce module est avantageusement intégré au pilote du module radio 2.2 qui gère les accès *Wi-Fi.* Lorsque l'utilisateur du terminal désire activer une connexion au réseau de communication, il demande cette activation de connexion au dispositif. Cette demande d'activation peut prendre diverses formes selon les modes de réalisation de l'invention. Selon un premier mode de réalisation, le dispositif étant branché sur l'ordinateur hôte, la demande est effectuée par une action de l'utilisateur sur cet ordinateur hôte. Cette action peut être faite par l'intermédiaire d'un logiciel dédié à la gestion du dispositif ou par l'intermédiaire des utilitaires de gestion de réseau intégrés au système d'exploitation. Cette action déclenche alors l'activation du dispositif. Selon un autre mode de réalisation, le dispositif dispose d'un organe de commande, bouton ou autre, permettant à l'utilisateur d'activer la connexion. Selon encore un autre mode de réalisation, l'activation de la connexion est automatique lors du branchement du dispositif sur la machine hôte. Dans ce cas, l'utilisateur demande l'activation de la connexion simplement en branchant le dispositif. Cette demande d'activation de la connexion est traitée par le pilote du module radio 2.2. La demande est alors gérée par le module de gestion des droits d'accès qui va vérifier si un ensemble de conditions liées à ces droits d'accès sont réunies pour autoriser ou pas la connexion.

Ces droits d'accès sont avantageusement stockés en mémoire protégée, c'est-à-dire dans une mémoire de la carte à puce qui n'est pas accessible depuis l'extérieur hormis à l'aide de l'outil de programmation ad hoc. Ces droits comprennent la référence du réseau sans fil auquel le dispositif est associé, typiquement l'identifiant *SSID* (*Service Set Identifier* en anglais) du réseau dans le cas du *Wi-Fi.* Avantageusement, ils peuvent comprendre également un seuil sur la force du signal comme élément potentiel de contrôle géographique. Avantageusement, ils comprennent également la clé de chiffrement, par exemple une clé *WPA* (*Wi-Fi Protected Access* en anglais), *WPA2, WPA-Entreprise* ou *WPA2-Entreprise,* utilisée pour le chiffrement des échanges sans fil entre le dispositif et le point d'accès. Certaines de ces clés peuvent être sous la forme de certificats permettant de limiter dans le temps l'utilisation de cette clé. Ils comprennent également des identifiants de connexion au réseau, typiquement un nom de connexion (*login* en anglais) et un mot de passe, mais tout autre type d'identifiant peut être utilisé. Tout type de politique de gestion des droits d'accès peut être mis en oeuvre accompagné des paramètres associés. Par exemple, dans le cas d'un accès limité en temps, est stocké le reste du temps disponible, ou crédit de temps, associé à la carte. Dans le cas d'un accès limité géographiquement sont stockés les identifiants du point d'accès ou des points d'accès autorisés, ainsi que, éventuellement, les seuils sur la force de signal requis.

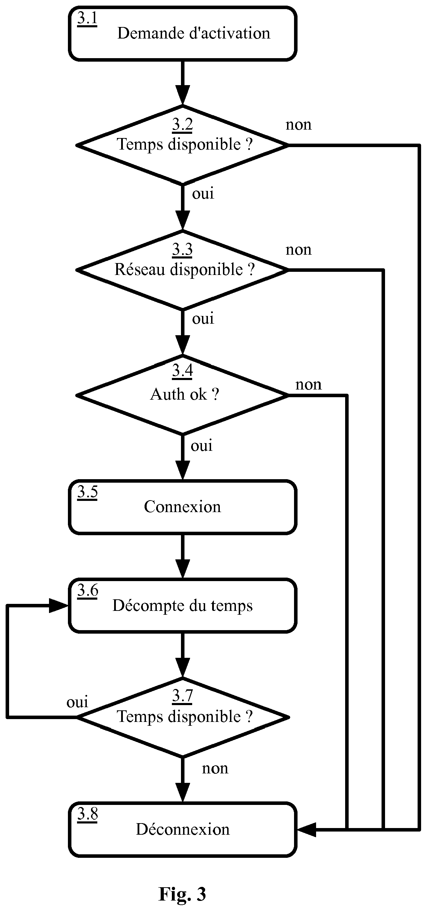

La Fig. 3 illustre un exemple de fonctionnement du module de gestion des droits d'accès dans le cas d'une limitation temporelle de l'accès. Lors d'une étape 3.1, le module reçoit une demande d'activation de connexion. Il teste alors s'il reste du temps disponible, c'est-à-dire s'il reste du crédit temps alloué au dispositif lors d'une étape 3.2. Il teste également, l'ordre de ces tests n'étant pas significatif, si le réseau auquel il est associé est disponible lors d'une étape 3.3. Ce test de disponibilité peut comprendre également le test éventuel du fait que la force du signal soit supérieure à une force de signal requise. Si l'un de ces tests est négatif, le dispositif refuse d'établir la connexion lors de l'étape 3.8. Si ces deux tests sont positifs, le dispositif s'authentifie auprès du point d'accès lors de l'étape 3.4 et cette authentification réussie, il établit une connexion avec le point d'accès lors d'une étape 3.5. Pendant que la connexion reste établie, le module effectue un décompte du temps lors d'une étape 3.6. Pour ce faire, il teste périodiquement s'il reste du temps disponible, étape 3.7. Le décompte du temps peut se faire, par exemple, à l'aide d'une horloge interne au token. Le temps restant est décompté jusqu'à déconnexion du token. Dans le cas de l'utilisation d'un certificat, la date de validité est vérifiée par interrogation d'un serveur de temps utilisant le protocole *NTP* (*Network Time Protocol* en anglais) pour connaître la date précise actuelle. Par la suite, l'horloge interne est utilisée pour connaître l'heure actuelle et s'assurer que le certificat n'arrive pas à expiration. Il est possible de penser à un dispositif combinant l'utilisation du décompte de temps et d'un certificat (un parallèle peut être fait avec un forfait téléphonique sur une limite de temps (1 heure) à utiliser sur 1 mois). Dans le cas de l'utilisation d'un certificat, la limite d'accès est une limite représentée par une date fixée, la date de révocation du certificat, au-delà de laquelle la connexion ne sera plus possible. La limite est alors indépendante du temps de connexion. L'heure actuelle est périodiquement comparée à la date et à l'heure de révocation du certificat afin d'en vérifier la validité. Le serveur *NTP* peut être implémenté sur le réseau local, mais il est aussi possible d'utiliser des serveurs disponibles sur le réseau de communication auquel on accède. Typiquement de tels serveurs sont disponibles sur le réseau Internet. Lorsque le crédit de temps alloué atteint la valeur nulle ou lorsque le certificat arrive à expiration le dispositif coupe la connexion lors de l'étape 3.8.

Alternativement, le point d'accès peut être programmé pour vérifier la validité du certificat afin d'autoriser ou pas la connexion. Dans cette alternative, c'est le point d'accès qui s'occupe d'interdire la connexion une fois la date de validité du certificat dépassée.

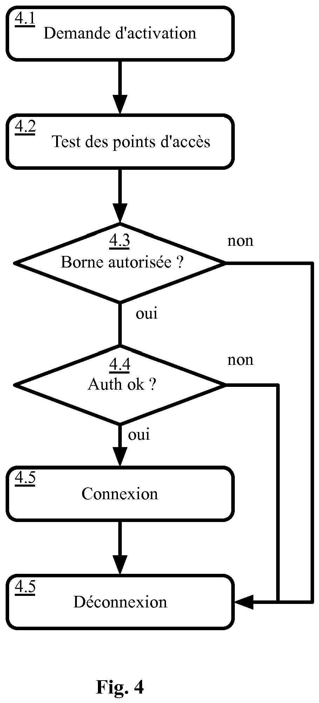

La Fig. 4 illustre un autre exemple de fonctionnement d'un dispositif selon l'invention dans le cas d'une gestion des droits d'accès par limitation géographique. On retrouve une étape 4.1 de réception d'une demande d'activation de la connexion. Dans ce cas, le dispositif dispose d'une liste éventuellement unitaire des identifiants des points d'accès autorisés pour une connexion à partir de ce dispositif. Ces identifiants peuvent notamment contenir le nom du réseau (*ESSID*), l'adresse *MAC* du point d'accès (*SSID*), l'adresse IP du point d'accès voire également la force du signal requise. L'utilisation de cette force de signal requise permet de limiter l'accès à une zone géographique proche du point d'accès. Cette liste est configurée dans le dispositif lors de sa personnalisation. Le module de gestion teste alors, lors d'une étape 4.2 les points d'accès disponibles, c'est-à-dire se trouvant à portée radio. Il vérifie si au moins l'un de ces points est un point d'accès autorisé lors d'une étape 4.3. Ce test comprend la vérification éventuelle que la force du signal est au moins égale à la force du signal requise. Si ce test est négatif, la connexion est refusée par une étape 4.6. Si ce test est positif, le dispositif s'authentifie auprès du point d'accès lors d'une étape 4.4. Après une authentification réussie, la connexion est établie lors d'une étape 4.5 avec le point d'accès autorisé détecté.

Avantageusement, une étape d'authentification de l'utilisateur auprès du dispositif est ajoutée. Dans certains cas, cette sécurité supplémentaire peut s'avérer utile. Cette étape peut se faire de plusieurs manières. Le plus sûr est de doter le dispositif d'un capteur biométrique permettant l'identification, par exemple par un dispositif de reconnaissance d'empreinte digitale exécuté sur le dispositif (*Match On Card* ou *MOC* en anglais). De ce fait, aucune entrée relative à l'authentification n'est faite sur le terminal du client et n'est donc susceptible d'être capturée par un logiciel malveillant. Alternativement, une authentification par mot de passe peut être faite. Dans ce cas, l'utilisateur ouvre un navigateur *WEB* par exemple sur le terminal et se connecte au dispositif. Le dispositif possède un serveur *WEB* embarqué qui propose une page d'authentification. Notons que cette dernière solution impose l'implémentation d'*IP, HTTP, TLS* et *TCP* sur la partie carte.

Les droits d'accès peuvent également être définis sous la forme d'une liste de contrôle d'accès *ACL* (*Access Control List* en anglais) configurée lors de la phase de personnalisation du dispositif. Cet *ACL* détermine quelles connexions sont autorisées, lesquelles doivent être sécurisées par le dispositif et lesquelles n'ont pas besoin de l'être. Il est alors possible de gérer des autorisations au niveau des services distants accessibles, en autoriser certains et en interdire d'autres. Le dispositif joue alors le rôle d'un pare-feu filtrant le trafic de manière sélective. Il est également possible d'intégrer un système de tunnel chiffré ou *VPN* (*Virtual Private Network* en anglais) et donc de n'autoriser que la connexion à un réseau distant particulier au travers de ce tunnel, le reste du réseau restant inaccessible.

La personnalisation du dispositif peut se faire, par exemple, par des moyens habituels de programmation d'une carte à puce sécurisée. Cette personnalisation nécessite des autorisations permettant de garantir qu'un utilisateur ne puisse pas modifier les droits programmés sur le dispositif.

Un tel dispositif offre l'avantage de conserver les informations sensibles dans le dispositif, avantageusement protégées au sein d'une carte à puce. Elle permet l'utilisation de réseaux sans fil sans modification du réseau. Le terminal peut l'utiliser comme un périphérique réseau classique.

## Revendications

1. Dispositif d'accès à un réseau sans fil comprenant :
- des moyens de connexion à un dispositif hôte ;
- des moyens de connexion à un point d'accès d'un réseau sans fil ;
- des moyens d'ouvrir une connexion avec le point d'accès du réseau sans fil à la réception d'une demande d'activation de connexion de façon à permettre l'accès au réseau sans fil à la machine hôte à laquelle il est connecté ;
**caractérisé en ce qu'**il comporte en outre :
- des moyens de gestion de droits d'accès au réseau sans fil pour vérifier les droits d'accès avant d'ouvrir la connexion.

2. Dispositif selon la revendication 1, **caractérisé en ce qu'**au moins les moyens de gestion de droits d'accès au réseau sans fil sont intégrés à une carte à puce.

3. Dispositif selon l'une des revendications 1 ou 2, **caractérisé en ce que** les moyens de gestion de droits d'accès au réseau sans fil comprennent des moyens de limiter temporellement cet accès.

4. Dispositif selon la revendication 3, **caractérisé en ce que** les moyens de gestion de droits d'accès au réseau sans fil comprennent un certificat ayant une durée de validité restreinte.

5. Dispositif selon la revendication 3, **caractérisé en ce que** les moyens de gestion de droits d'accès au réseau sans fil comprennent des moyens de décompter le temps de connexion d'un crédit préprogrammé.

6. Dispositif selon l'une des revendications 1 ou 2, **caractérisé en ce que** les moyens de gestion de droits d'accès au réseau sans fil comprennent des moyens de limiter géographiquement cet accès.

7. Dispositif selon l'une des revendications 1 ou 2, **caractérisé en ce que** les moyens de gestion de droits d'accès au réseau sans fil comprennent des moyens de gestion de listes de contrôle d'accès permettant de déterminer quelles connexions sont autorisées.

8. Procédé de gestion des droits d'accès à un réseau sans fil **caractérisé en ce qu'**il comprend les étapes suivantes effectuées par un dispositif d'accès réseau sans fil:
- une étape de réception d'une demande d'activation de connexion par le dispositif d'accès réseau sans fil comprenant des moyens de connexion à un dispositif hôte, des moyens de connexion à un point d'accès d'un réseau sans fil et des moyens d'ouvrir une connexion avec le point d'accès du réseau sans fil à la réception d'une demande d'activation de connexion de façon à permettre l'accès au réseau sans fil à la machine hôte à laquelle il est connecté ;
- une étape de test, l'étape de test comprenant :
- une étape de test des points d'accès disponibles et une étape de vérification de ce qu'au moins un point d'accès disponible est autorisé ; ou bien,
- une étape de test de temps disponible et une étape de test de la disponibilité du réseau ;
- une étape de connexion si ce test est positif ;
- une étape refusant la connexion si ce test est négatif.

## Patentansprüche

1. Zugangsvorrichtung zu einem drahtlosen Netz, die enthält:
- Einrichtungen zur Verbindung mit einer Host-Vorrichtung;
- Einrichtungen zur Verbindung mit einem Zugangspunkt eines drahtlosen Netzes;
- Einrichtungen zum Öffnen einer Verbindung mit dem Zugangspunkt des drahtlosen Netzes bei Empfang einer Anforderung einer Verbindungsaktivierung, um der Host-Maschine, mit der sie verbunden ist, den Zugang zum drahtlosen Netz zu erlauben;
**dadurch gekennzeichnet, dass** sie außerdem aufweist:
- Verwaltungseinrichtungen von Zugangsrechten zum drahtlosen Netz, um die Zugangsrechte vor dem Öffnen der Verbindung zu verifizieren.

2. Vorrichtung nach Anspruch 1, **dadurch gekennzeichnet, dass** mindestens die Verwaltungseinrichtungen von Zugangsrechten zum drahtlosen Netz in eine Chipkarte integriert sind.

3. Vorrichtung nach einem der Ansprüche 1 oder 2, **dadurch gekennzeichnet, dass** die Verwaltungseinrichtungen von Zugangsrechten zum drahtlosen Netz Einrichtungen zur zeitlichen Begrenzung dieses Zugangs enthalten.

4. Vorrichtung nach Anspruch 3, **dadurch gekennzeichnet, dass** die Verwaltungseinrichtungen von Zugangsrechten zum drahtlosen Netz ein Zertifikat enthalten, das eine begrenzte Gültigkeitsdauer hat.

5. Vorrichtung nach Anspruch 3, **dadurch gekennzeichnet, dass** die Verwaltungseinrichtungen von Zugangsrechten zum drahtlosen Netz Einrichtungen zum Rückwärtszählen der Verbindungszeit eines vorprogrammierten Kredits enthalten.

6. Vorrichtung nach einem der Ansprüche 1 oder 2, **dadurch gekennzeichnet, dass** die Verwaltungseinrichtungen von Zugangsrechten zum drahtlosen Netz Einrichtungen zur geographischen Begrenzung dieses Zugangs enthalten.

7. Vorrichtung nach einem der Ansprüche 1 oder 2, **dadurch gekennzeichnet, dass** die Verwaltungseinrichtungen von Zugangsrechten zum drahtlosen Netz Verwaltungseinrichtungen von Zugangskontrolllisten enthalten, die es ermöglichen zu bestimmen, welche Verbindungen erlaubt sind.

8. Verfahren zur Verwaltung der Zugangsrechte zu einem drahtlosen Netz, **dadurch gekennzeichnet, dass** es die folgenden Schritte enthält, die von einer Zugangsvorrichtung zum drahtlosen Netz ausgeführt werden:
- einen Schritt des Empfangs einer Verbindungsaktivierungsanforderung durch die Zugangsvorrichtung zum drahtlosen Netz, die Verbindungseinrichtungen mit einer Host-Vorrichtung, Verbindungseinrichtungen mit einem Zugangspunkt eines drahtlosen Netzes und Einrichtungen enthält, um bei Empfang einer Verbindungsaktivierungsanforderung eine Verbindung mit dem Zugangspunkt des drahtlosen Netzes zu öffnen, um der Host-Maschine, mit der sie verbunden ist, den Zugang zum drahtlosen Netz zu erlauben;
- einen Testschritt, wobei der Testschritt enthält:
- einen Testschritt der verfügbaren Zugangspunkte und einen Verifizierungsschritt, dass mindestens ein verfügbarer Zugangspunkt autorisiert ist; oder aber
- einen Testschritt der verfügbaren Zeit und einen Testschritt der Verfügbarkeit des Netzes;
- einen Verbindungsschritt, wenn dieser Test positiv ist;
- einen die Verbindung verweigernden Schritt, wenn dieser Test negativ ist.

## Claims

1. Device for access to a wireless network comprising:
- means of connection to a host device;
- means of connection to an access point of a wireless network;
- means for opening a connection with the access point of the wireless network on receipt of a connection activation request so as to allow the host machine to which it is connected to access the wireless network;
**characterized in that** it furthermore comprises:
- means for managing rights of access to the wireless network so as to verify the access rights before opening the connection.

2. Device according to Claim 1, **characterized in that** at least the means for managing rights of access to the wireless network are integrated into a chip card.

3. Device according to one of Claims 1 and 2, **characterized in that** the means for managing rights of access to the wireless network comprise means to temporally limit this access.

4. Device according to Claim 3, **characterized in that** the means for managing rights of access to the wireless network comprise a certificate having a restricted duration of validity.

5. Device according to Claim 3, **characterized in that** the means for managing rights of access to the wireless network comprise means to count down the connection time of a preprogrammed credit.

6. Device according to one of Claims 1 and 2, **characterized in that** the means for managing rights of access to the wireless network comprise means to geographically limit this access.

7. Device according to one of Claims 1 and 2, **characterized in that** the means for managing rights of access to the wireless network comprise means for managing access control lists making it possible to determine which connections are authorized.

8. Method for managing the rights of access to a wireless network **characterized in that** it comprises the following steps performed by a wireless network access device:
- a step of receiving a connection activation request by the wireless network access device comprising means of connection to a host device, means of connection to an access point of a wireless network and means for opening a connection with the access point of the wireless network on receipt of a connection activation request so as to allow the host machine to which it is connected to access the wireless network;
- a test step, the test step comprising:
- a step of testing the access points available and a step of verifying that at least one available access point is authorized;
or else,
- a step of testing time available and a step of testing the availability of the network;
- a step of connecting if this test is positive;
- a step refusing connection if this test is negative.
